# EUROPEAN PATENT APPLICATION

(11) **EP 3 543 853 A1**
(43) Date of publication of application: **25.09.2019**
(21) Application number: 18162888.4
(22) Date of filing: 20.03.2018
(51) Int. Cl.: G06F 9/50

(54) **PROVIDING MICROSERVICE INFORMATION**

(71) Applicant: Siemens Healthcare GmbH, 91052 Erlangen (DE)
(72) Inventor: Albrecht, Eric, 90459 Nürnberg (DE); Guillén Schlippe, Pablo, 91056 Erlangen (DE); Söllner, Robert, 91088 Bubenreuth (DE)

(57) **Abstract**

In one aspect the invention relates to a method for providing microservice information, comprising receiving a microservice request with a first interface, determining the microservice information by querying a microservice registry based on the microservice request with a first computation unit, wherein the microservice registry is stored in a distributed ledger, and providing the microservice information with the first interface. In particular, the first interface is an interface of a microservice registry or of a server running the microservice registry. In particular, the first computation unit is a computation unit of a microservice registry or of a server running the microservice registry.

The inventors recognized that by using a microservice registry stored in a distributed ledger a local copy of the microservice registry can be used for determining the microservice information based on the microservice request, leading to a low latency and a fast response time. At the same time each microservice registry can be used as a fallback for all other microservice registries.

## Description

A common alternative to monolithic software architecture is the usage of a plurality of isolated, loosely-coupled, stand-alone microservices (also denoted as "microservice software architecture"). In general, a microservice is configured to perform only one distinct task. More complicated software applications can then be created by combining several microservices.

In comparison to the monolithic software architecture the microservice software architecture has the advantage that it allows a simpler maintenance, and an efficient performance scaling of the application by executing or running several instances of the same microservice.

Because there can be several instances of a single microservice, the communication between these several instances and other microservices or applications is handled by a microservice registry (another term is "service registry"). In particular, the service registry can receives requests for the usage of a microservice, and forward the request to a certain instance of the microservice (taking into account e.g. load balancing or legal requirements). The interaction with the service registry is usually done by an application programming interface (an abbreviation is "API"). Common examples for microservice registries are "Eureka", "Consul", "Zookeeper", and "Etcd". In general, the term "microservice registry" can be used as a name for the described software, or for hardware, in particular a server, running this software.

So in general an application being based on a microservice software architecture is dependent on the availability of the microservice registry and the latency of the connection to the microservice registry. So it is a common approach to set up several microservice registries, in particular in different geographic locations, to ensure fallback levels and short ping times.

In order to ensure a proper functionality of the applications using the several distributed microservice registries, each of the distributed microservice registries must use the same underlying data. Therefor it is known to use a single database storing the data necessary for operating the distributed microservice registries, raising basically the same issues as using only one microservice registry. As an alternative it is known that each of the distributed microservice registries stores a copy of said database. In this case it has to be ensured that the database copies are synchronized.

It is the problem of the present invention to provide a solution for the synchronization of distributed microservice registries.

The problem is solved by a method for operating a microservice registry, by an operating system, by a computer program product and by a computer-readable medium according to the independent claims. Advantageous aspects and embodiments are described in the dependent claims and in the following description.

In the following the solution according to the invention is described with respect to the claimed providing systems as well as with respect to the claimed methods. Features, advantages or alternative embodiments herein can be assigned to the other claimed objects and vice versa. In other words, claims for the providing systems can be improved with features described or claimed in the context of the methods. In this case, the functional features of the method are embodied by objective units of the providing system.

In one aspect the invention relates to a method for providing microservice information, comprising receiving a microservice request with a first interface, determining the microservice information by querying a microservice database based on the microservice request with a first computation unit, wherein the microservice database is stored in a distributed ledger, and providing the microservice information with the first interface. In particular, the first interface is an interface of a microservice registry or of a server running the microservice registry. In particular, the first computation unit is a computation unit of a microservice registry or of a server running the microservice registry.

In particular, the microservice database can comprise a plurality of microservice informations, and in particular, the step of determining the microservice information can be executed by selecting one of the plurality of microservice informations stored in the microservice database.

In general, a distributed ledger is a certain type of a decentralized database. In particular, the distributed ledger is distributed in the sense that there are several copies of (at least parts of) the distributed ledger in different memory units, wherein the memory units are spatially distributed. The distributed ledger comprises multiple records, wherein the multiple records can be identified with database entries. In particular, the multiple records are organized as data blocks. In particular, the records are created by different entities, in particular different nodes of a network, and stored with the different entities, in particular within the different nodes if the records. In other words, the construction and maintenance of the records is typically not performed by a central authority, but independently by nodes of the network. In typical cases, all nodes of the network maintain one copy of the distributed ledger.

In general, updating the distributed ledger is typically based on a consensus mechanism, wherein a consensus mechanism ensures that the different copies of the distributed ledger match, also in the cases of a delayed communication between the entities storing the copies of the distributed ledger.

The inventors recognized that by using a microservice registry stored in a distributed ledger a local copy of the microservice registry can be used for determining the microservice information based on the microservice request, leading to a low latency and a fast response time. At the same time each microservice registry can be used as a fallback for all other microservice registries.

According to further possible aspect of the invention the distributed ledger comprises data blocks.

In general, data blocks are the elementary data records of the ledger. In particular, a data block is an immutable data structure, which means that a data block cannot be changed or modified. This implies that changes to the ledger can only be performed by adding or removing data blocks. In particular, the immutability of a data block can be ensured by storing a hash value of the data block within the data block or outside the data block.

The inventors recognized that using a distributed ledger comprising data blocks different copies of the distributed ledger can be synchronized more efficiently. In particular, using immutable data blocks it can be made harder for someone to manipulate the distributed ledger or the microservice database.

According to a further possible aspect of the invention a first data block of the distributed ledger comprises a link information related to a second data block of the distributed ledger. In particular, the first data block and the second data block can be identical. In particular, each of the data blocks of the distributed ledger comprises a link to a data block of the distributed ledger.

In particular, a first data block of the ledger and a second data block of the ledger can be linked. This link can be an undirected or a directed link. In particular, a link of the first data block and the second data block is present, if the first data block comprises a link information related to the second data block and/or if the second data block comprises a link information related to the first data block. In particular, a link information can be a data integrity information. In particular, by inspecting said data integrity information related to the first data block a manipulation and/or altering of the first data block can be recognized or determined.

A common example for a link information related to a first data block is a hash of (at least parts) of the first data block, in particular, the hash of (at least parts) of the first data block may be stored in the second data block. Storing the hash of the first data block in the second data block allows verifying that said at least one of the data blocks was not altered after the determining of the hash, if it can be assumed that the hash contained in the second data block was not altered.

It is also possible that the data blocks of the distributed ledger comprise several link informations, in particular each of the further link informations can be a hash of another data block of the distributed ledger. It is possible that a link information contained in a data block of the distributed ledger is related to said data block, in particular, it is possible that the link information in a data block is identical with the hash of (at least parts) of said data block.

The inventors have recognized that by using link information in the data blocks the structure of the distributed ledger can be incorporated into the data blocks, so that the structure of the distributed ledger need not to be stored in an external and/or separate data item.

According to a further possible aspect of the invention a link information related to a second data block comprises a hash of the second data block.

In general a hash of a data block is the result of a hash function being applied to said data block, the result of a hash function being applied to a subset of information contained in said data block, or the result of a hash function being applied to a combination of a first subset of information contained in said data block and a second subset of information, wherein the second subset of information is a subset of information of the data block that contains or will contain said hash.

In general a hash function is a function that maps data of arbitrary size to data of a fixed size. In particular, the hash function is a cryptographic hash function. In particular, a cryptographic hash function is a deterministic function; in particular the output of the hash function does only depend on the input of the hash function. In particular, a cryptographic hash function can be calculated in a fast manner for all input values. In particular, a cryptographic hash function is only brute-force invertible, i.e. given the output of a cryptographic hash function it is only possible to calculate the corresponding input of the cryptographic hash function by calculating the cryptographic hash function for an large amount of input values (i.e. a brute-force attack). In other words, finding the input value corresponding to the output value of a cryptographic hash function is an intractable problem. In particular, finding a first input value and a second input value of a cryptographic hash function that lead to an identical output value is an intractable problem. In particular, a cryptographic hash function is scattering; i.e. even correlated inputs of the cryptographic hash function lead to uncorrelated outputs of the cryptographic hash function.

In particular, a hash function can calculate a Merkle root of the input data, in particular by computing hashes within a Merkle tree.

The inventors recognized that using a hash of a second data block as link information comprised by a first data block makes the second data block immutable, or at least changes or manipulations of the second data block can be determined by inspecting the first data block, in particular by comparing a hash calculated based on the second data block with the hash of the second data block stored in the first data block.

According to a further possible aspect of the invention the microservice information is contained in a data block of the distributed ledger. The inventors recognized that by microservice information being stored in the data blocks the synchronization and the revision-safety of the microservice information can be assured across different microservice registries.

According to a further aspect of the invention the microservice request is related to a first microservice, and the microservice information is based on an instance of the first microservice.

In particular, a microservice can be defined by a program logic, by its functionality and/or by a set of instances of the microservice. An instance of a microservice is one of a possible plurality of instances of the microservice running on the same or different virtual or real servers. In particular, the instance of the microservice can be a webservice being hosted on a webserver. In particular, an interaction with an instance of a microservice can take place by using an application programmable interface ("API"), in particular a REST API. In particular, there is a 1:N relation between a microservice and the instances of the microservice, i.e. there can be an arbitrary number of instances of one microservice. A multiplicity of instances of microservices is often used for purposes of load-balancing. In particular, the step of determining the microservice information can comprise load-balancing between different instances of microservices or between different servers running instances of microservices.

In general, instances of microservices run on different servers than the microservice registry, but it is also possible that some or all of the instances of the microservices run on the microservice registry or on the server of the microservice registry.

The inventors recognized that by this aspect of the invention the microservice registry can execute a load balancing between different instances of a microservice, leading to a better performance of the whole application

According to a further aspect of the invention the microservice request comprises an identifier of the first microservice. In particular, the identifier of the first microservice can be a logical name of the first microservice. If the first microservice is given by a function or a class of a program logic, the logical name can be the name of the function or the name of the class within the program logic. In particular, the identifier of the first microservice can comprise hierarchical information, in particular the location of the first microservice in a hierarchical structure. A common example for such a hierarchical information are namespaces within a program logic. The inventors recognized that based on an identifier of the first microservice the microservice registry can determine the microservice information in a fast an efficient way.

According to a further aspect of the invention the microservice information comprises a location of the instance of the first microservice. In general, a location of the instance of the first microservice can be used for locating the first microservice and/or for interacting with the first microservice. In particular, the location of the instance of the first microservice is the location of the virtual or real server hosting the instance of the first microservice. In particular, a location of the instance of the first microservice can be a URI (acronym for "Uniform Resource Identifier"), a URL (acronym for "Uniform Resource Locator") or a URN (acronym for "Uniform Resource Name"). In particular, a location of the instance of the first microservice can also comprise an IP (acronym for "Internet Protocol") address, in particular an IPv4 (acronym for "Internet Protocol version 4") or IPv6 (acronym for "Internet Protocol version 6") address. In particular, a location of the instance of the first microservice can also comprise a port number. In particular, a location of the instance of the first microservice can also comprise a process number and/or process name associated with the instance of the first microservice being executed in an operating system, in particular if the case if the instance of the first microservice is executed on the microservice registry or on the server of the microservice registry. The inventors recognized that by the microservice information comprising a location of the instance of the first microservice, the instance of the first microservice can be accessed efficiently by a client using the microservice registry.

According to a further aspect of the invention the microservice request comprises authentication information, and the method for providing microservice information furthermore comprises determining an authorization to access the first microservice and/or the instance of the first microservice based on the authentication information with the first computation unit, wherein the step of providing the microservice information is executed only in the case of a positive authorization. In particular, an authorization can be authorization data, in particular a Boolean value being "1" or "True" in the case an accessing entity issuing the microservice request is authorized to access the first microservice, an in particular a Boolean value being "0" or "False" in the case the accessing entity issuing the microservice request is not authorized to access the first microservice.

In particular, the authorization to access a microservice or an instance of a microservice can be stored in a list, which documents for each microservice or for each instance of each microservice which entities are allowed to use the microservice. In particular, such a list can be contained in the microservice database, so that the authorization can be determined by querying the microservice database. In particular, the microservice database can comprise for each microservice or for each instance of a microservice a list of entities which are authorized to use the microservice. It is also possible that the list is stored in another distributed ledger.

In general, the authentication information is data created or sent by an accessing entity issuing the microservice request to proof its identity. In particular, the authentication information can comprise a digital certificate based on an asymmetric cryptography system, in particular on a public key infrastructure (an acronym is "PKI"), or a shared secret (another term for "shared secret" is "token").

The inventors recognized that by determining the authorization by the microservice registry the authorization can be managed centrally. Furthermore, by storing the authorization in the distributed ledger, different microservice registries can use synchronized authorization information.

According to a further aspect of the invention the method for providing microservice information comprises the step of receiving a registration request and/or a deregistration request related to a second microservice and/or related to an instance of a second microservice with the first interface, and the step of documenting a registration and/or a deregistration of the second microservice and/or the instance of the second microservice in the distributed ledger with the first computation unit. In particular, the method for providing microservice information comprises the step of receiving a registration request related to a second microservice and/or related to an instance of a second microservice with the first interface, and the step of documenting a registration of the second microservice and/or the instance of the second microservice in the distributed ledger with the first computation unit. In particular, the method for providing microservice information comprises the step of receiving a deregistration request related to a second microservice and/or related to an instance of a second microservice with the first interface, and the step of documenting a deregistration of the second microservice and/or the instance of the second microservice in the distributed ledger with the first computation unit.

In particular, the registration request and/or the deregistration request are sent by an instance the second microservice. In particular, the second microservice may be identical with the first microservice. In particular, the instance of the second microservice may be identical with an instance of the first microservice.

In particular, documenting a registration of a second microservice and/or an instance of a second microservice is executed by storing microservice information related to the second microservice and/or related to the instance of the second microservice in the microservice database. In particular, documenting a deregistration of a second microservice and/or an instance of a second microservice is executed by deleting microservice information related to the second microservice and/or related to the instance of the second microservice in the microservice database. In this context, deleting microservice information can also be done by marking the microservice information as invalid.

In particular, documenting a registration and/or a deregistration of the second microservice and/or an instance of the second microservice can comprise appending a further data block to the distributed ledger. In the case of registration, the further data block can comprise microservice information related to the second microservice and/or related to the instance of the second microservice. In the case of deregistration, the further data block can comprise microservice information related to the second microservice and/or related to the instance of the second microservice, wherein the microservice information is marked as invalid. Appending a further data block to the distributed ledger can comprise a proof of work, a proof of storage, a proof of stake, and/or a proof of elapsed time. A proof of work can be a compute-bound proof of work, a network-bound proof of work and/or a memory-bound proof of work.

According to a further aspect of the invention the method for providing microservice information can comprise the step of transferring an amount of cryptocurrency from a first account to a second account with the first computation unit, wherein the first account is related with an accessing entity issuing the microservice request, and wherein the second account is related with a microservice entity operating the first microservice and/or the instance of the first microservice.

In general a cryptocurrency is a digital asset or a digital medium which can be exchanged between different entities, wherein methods of cryptography are used for transferring cryptocurrencies from a first entity to a second entity, for the creation of a new amount of cryptocurrency and/or for verifying transfers of cryptocurrency from a first entity to a second entity. In particular, a cryptocurrency is a digital currency. Cryptocurrency can be stored in accounts (another term is "wallet"), in particular, an account corresponds to a asymmetric key pair comprising a private key and a public key, wherein the private key must be used for transferring cryptocurrency from said account to another account, and wherein the public key must be used for transferring cryptocurrency from another account to said account. In particular, an account can be identified by the public key.

In general, transferring a certain amount of cryptocurrency from a first account to a second account comprises creating a transaction log, wherein the first account corresponds to a asymmetric key pair comprising a first private key and a first public key, and wherein the second account corresponds to an asymmetric key pair comprising a second private key and a second public key, and wherein the transaction log comprises the second public key and at least one key of the first private key and the first public key, and wherein the transaction log furthermore comprises the amount of cryptocurrency being transferred. In particular, a transaction log can also comprise a signature based on the amount of cryptocurrency being transferred and the second public key, signed with the first private key.

In particular, transferring a certain amount of cryptocurrency is executed by including the transaction log into a data block of the distributed ledger or another distributed ledger.

The inventors recognized that by transferring cryptocurrency an efficient payment process for usage of the microservice registry or an instance of a microservice can be initiated.

According to a further aspect of the invention transferring the amount of cryptocurrency is executed by means of a smart contract.

In general, a smart contract comprises program elements which can be executed by the microservice registry, a server, a client, or any other computation node. In particular, the program elements can comprise program logic, source code, scripting language and/or compiled machine code. In particular, a smart contract is documented in a distributed ledger. In particular, a smart contract can comprise conditions in terms of program logic, and consequences in terms of program logic, wherein the consequences are activated or executed if certain conditions are fulfilled.

In particular, the smart contract can be stored related to the first microservice or related to the instance of the first microservice. In particular, the smart contract can be stored in the microservice database and/or in the distributed ledger comprising the microservice database. In particular, the smart contract can be stored in the same data block as the microservice information related to the first microservice or related to the instance of the first microservice.

The inventors recognized that based on a smart contract cryptocurrency can be transferred both automatically and in a comprehensible way.

According to a further aspect of the invention the method for providing microservice information comprises determining the first account based on the microservice request with the first computation unit. In particular, the first account can be determined based on authentication information contained in the microservice request. In particular, the microservice request can comprise a public key identifying the first account. In particular, the first account can also be determined based on an IP address or a MAC (acronym for "media access control") address of the accessing entity issuing the microservice request, based on an HTTP (acronym for "Hypertext Transfer Protocol") header related to the microservice request or based on a shared secret contained in the microservice request. The inventors recognized that by determining the first account based on the microservice request transferring the cryptocurrency can be executed in a fast an efficient way.

According to a further aspect of the invention the distributed ledger comprises a blockchain, a blocktree and/or a tangle. The inventors recognized that using one of those types of distributed ledgers already existing distributed ledgers or infrastructures of distributed ledgers can be used, increasing the stability and availability of the microservice database.

According to a further possible aspect of the invention the method for providing microservice information comprises the step of receiving the microservice information with a second interface, the step of determining an instance of the first microservice based on the microservice information with a second computation unit, the step of sending input data to the instance of the first microservice with a second interface, and the step of receiving output data from the instance of the first microservice with the second interface. In particular, the method for providing microservice information comprises the step of sending the microservice request with the second interface. In particular, the second interface is an interface of a client. In particular, the second computation unit is a computation unit of the client. In particular, the steps of sending input data and receiving output data are based on an API.

Furthermore, the invention relates to a method for using microservice information provided by a method for providing microservice information according to the invention or one of its aspects, comprising the step of determining an instance of the first microservice based on the microservice information with a second computation unit, the step of sending input data to the instance of the first microservice with a second interface, and the step of receiving output data from the instance of the first microservice with the second interface. In particular, the second interface is an interface of a client. In particular, the second computation unit is a computation unit of the client. In particular, the steps of sending input data and receiving output data are based on an API. According to a further aspect the method for using microservice information comprises the step of sending the microservice request with the second interface, in particular to the server, in particular to the first interface of the server.

Furthermore, the invention relates to a method for receiving output data from an instance of a first microservice, comprising the step of determining the instance of the first microservice based on microservice information with a second computation unit, wherein the microservice information was determined by querying a microservice database based on a microservice request with a first computation unit of a microservice registry, wherein the microservice database is stored in a distributed ledger, the step of sending input data to the instance of the first microservice with a second interface, and the step of receiving output data from the instance of the first microservice with the second interface. According to a further aspect of the invention the method for receiving output data from an instance of a first microservice comprises the step of sending the microservice request with the second interface, in particular to the server, in particular to the first interface of the server.

Furthermore, the invention relates to a server for providing microservice information, comprising:
- a first interface, configured for receiving a microservice request,
   furthermore configured for providing the microservice information
- a first computation unit, configured for determining the microservice information by querying a microservice database based on the microservice, wherein the microservice database is stored in a distributed ledger.

In particular the server for providing microservice information can be configured to execute the method for providing microservice information according to the invention and its aspects. The server is configured to execute the method and its aspects by the first interface and the first computation unit being configured to execute the respective method steps. In particular, the server can host the microservice registry or can be identical with the microservice registry.

Furthermore, the invention relates to a client for using the microservice information provided by a method for providing microservice information according to the invention and its aspects, comprising:
- a second computation unit, configured for determining an instance of the first microservice based on the microservice information,
- a second interface, configured for sending input data to the instance of the first microservice, and
furthermore configured receiving output data from the instance of the first microservice.

In particular the client for using the microservice information provided by a method for providing microservice information according to the invention and its aspects can be configured to execute the method for using the microservice information provided by a method for providing microservice information according to the invention and its aspects. The client is configured to execute the method and its aspects by the second interface and the second computation unit being configured to execute the respective method steps.

Furthermore, the invention relates to a client for receiving output data from an instance of a first microservice, comprising:
- a second computation unit, configured for determining the instance of the first microservice based on microservice information, wherein the microservice information was determined by querying a microservice database based on a microservice request with a first computation unit of a server, wherein the microservice database is stored in a distributed ledger,
- a second interface, configured for sending input data to the instance of the first microservice,
furthermore configured for receiving output data from the instance of the first microservice.

In particular the client for receiving output data from an instance of a first microservice can be configured to execute the method for receiving output data from an instance of a first microservice according to the invention and its aspects. The client is configured to execute the method and its aspects by the second interface and the second computation unit being configured to execute the respective method steps.

Furthermore, the invention relates to a microservice system comprising a server and a client, the server comprising
- a first interface, configured for receiving a microservice request,
   furthermore configured for providing the microservice information
- a first computation unit, configured for determining the microservice information by querying a microservice database based on the microservice, wherein the microservice database is stored in a distributed ledger;
   and the client comprising
- a second computation unit, configured for determining an instance of the first microservice based on the microservice information,
- a second interface, configured for sending input data to the instance of the first microservice, and
furthermore configured receiving output data from the instance of the first microservice.

The server, the clients and the microservice system can be realized as a data processing system or as a part of a data processing system. Such a data processing system can, for example, comprise a cloud-computing system, a computer network, a computer, a tablet computer, a smartphone or the like. The server and the clients can comprise hardware and/or software. The hardware can be, for example, a processor system, a memory system and combinations thereof. The hardware can be configurable by the software and/or be operable by the software.

In another aspect the invention relates to a computer program product comprising a computer program, the computer program being loadable into a first memory unit of a server, including program code sections to make the server execute the method for providing microservice information according to an aspect of the invention, when the computer program is executed in said server.

In another aspect the invention relates to a computer-readable medium, on which program code sections of a computer program are saved, said program code sections being loadable into and/or executable in a server to make the server execute the method for providing microservice information according to an aspect of the invention, when the program code sections are executed in the server.

In another aspect the invention relates to a computer program product comprising a computer program, the computer program being loadable into a second memory unit of a client, including program code sections to make the client execute the method for using the microservice information provided by a method for providing microservice information or the method for receiving output data from an instance of a first microservice according to an aspect of the invention, when the computer program is executed in said client.

In another aspect the invention relates to a computer-readable medium, on which program code sections of a computer program are saved, said program code sections being loadable into and/or executable in a client to make the client execute method for using the microservice information provided by a method for providing microservice information or the method for receiving output data from an instance of a first microservice according to an aspect of the invention, when the program code sections are executed in the client.

The realization of the invention by a computer program product and/or a computer-readable medium has the advantage that already existing servers or clients can be easily adopted by software updates in order to work as proposed by the invention.

The properties, features and advantages of this invention described above, as well as the manner they are achieved, become clearer and more understandable in the light of the following description and embodiments, which will be described in details in the context of the drawings. This following description does not limit the invention on the contained embodiments. Same components or parts can be labeled with the same reference signs in different figures. In general the figures are not for scale. In the following:
- Fig. 1: displays a microservice architecture comprising a server, a client and a microservice database,
- Fig. 2: displays an embodiment of a microservice database,
- Fig. 3: displays an embodiment of a microservice database stored in a distributed ledger,
- Fig. 4: displays a first embodiment of the method for providing microservice information,
- Fig. 5: displays a second embodiment of the method for providing microservice information,
- Fig. 6: displays a third embodiment of the method for providing microservice information,
- Fig. 7: displays a fourth embodiment of the method for providing microservice information,
- Fig. 8: displays a fifth embodiment of the method for providing microservice information,
- Fig. 9: displays an embodiment of the method for receiving output data from an instance of a microservice,
- Fig. 10: displays a server and a client.

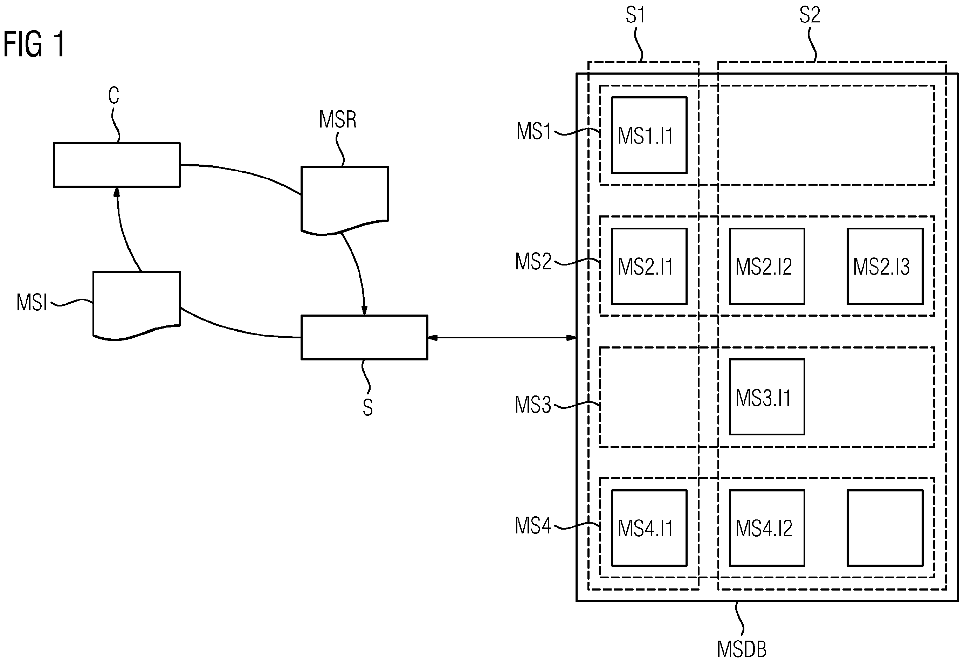

Fig. 1 displays a microservice architecture comprising a server S, a client C and a microservice database MSDB. The server S executes or hosts a microservice registry, and the client C executes an application relying on and/or using microservices MS1, ..., MS4. The microservice architecture comprises in this example two execution servers S1, S2, on which instances MS1.I1, ..., MS4.I2 of the microservices MS1, ..., MS4 are executed. In this embodiment, the execution servers S1, S2 are separate from the server S executing the microservice registry. Alternatively, at least one of the execution servers S1, S2 can be identical with the server S executing the microservice registry.

Within the microservice architecture, in this embodiment there are four microservices MS1, ..., MS4. For microservice MS1 there is one instance MS1.I1 executed on the first execution server S1. For microservice MS2 there are three instances MS2.I1, ..., MS2.I3 executed by the first execution server S1 and the second execution server S2, wherein one instance MS2.I1 is executed by the first execution server S1, and two instances MS2.I2, MS2.I3 are executed by the second execution server S2. For microservice MS3 there is one instance MS3.I1 executed by the second execution server S2. For microservice MS4 there are two instances MS4.I1, MS4.I2 executed by the first execution server S1 and the second execution server S2, the first instance MS4.I1 executed by the first execution server S2, and the second instance MS4.I2 executed by the second execution server S2.

So in this embodiments there are microservices MS1, ..., MS4 with only one executed instance MS1. I1, ..., MS4.I2, and microservices MS1, ..., MS4 with several executed instances MS1. I1, ..., MS4.I2. It is also possible that there are microservices MS1, ..., MS4 without an executed instance MS1. I1, ..., MS4.I2.

In this embodiment, the client C and the server S are separate units. Alternatively, the client C and the server S can also be identical. Advantageously both the client C and the server S are webservers. The client C and the server S communicate using an application programmable interface (acronym "API") provided by the server S. In particular, the API is a REST (acronym for "Representational State Transfer") API (another term is "RESTful API"). The communication between the client C and the server S is driven by the client C, in particular by the client C calling the API of the server S, the server S executing program logic as a response to the call of the API, and the server S returning data to the client via the API.

If the server S and the client C are identical, an alternative for the communication between the client C and the server S is using IPC (acronym for "inter process communication").

In particular, the client C sends a microservice request MSR to the server S using the API provided by the server S. As a response, the server S returns microservice information MSI to the client C.

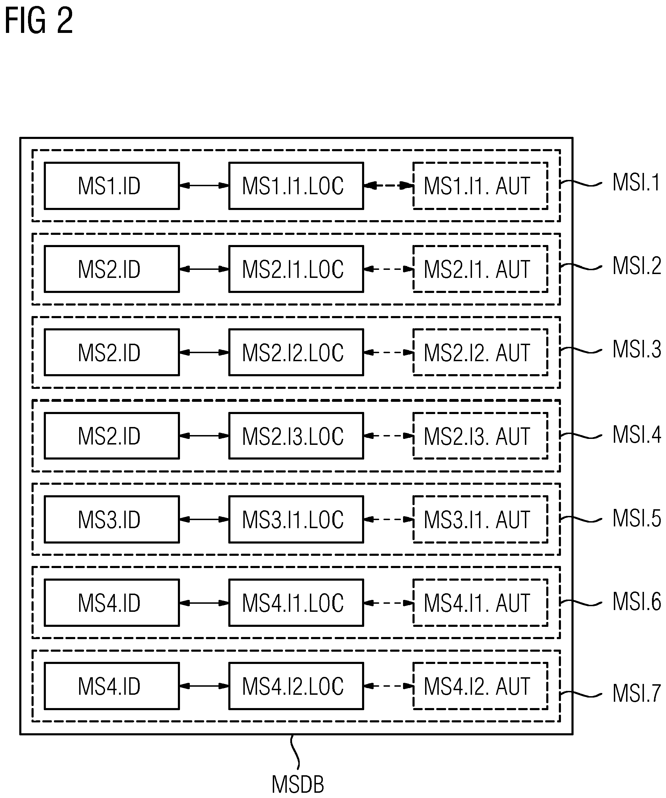

Fig. 2 displays an embodiment of a microservice database MSDB, which relates to the microservice architecture displayed in Fig. 1. In this embodiment, the microservice database MSDB comprises microservice information MSI.1, ..., MSI.8. Each of the microservice informations MSI.1, ..., MSI.8 comprises an identifier MS1.ID, ..., MS2.ID of an microservice MS1, ..., MS4. In this embodiment, the identifier MS1.ID, ..., MS2.ID of an microservice MS1, ..., MS4 is the logical name of the microservice MS1, ..., MS4.

Furthermore, each of the microservice information MSI.1, ..., MSI.8 comprises a location MS1.I1.LOC, ..., MS4.I2.LOC of an instance MS1.1, ..., MS4.I2 of a microservice MS1, ..., MS4. In this embodiment, the location MS1.I1.LOC, ..., MS4.I2.LOC of an instance MS1.1, ..., MS4.I2 of a microservice MS1, ..., MS4 is an URL that can be used to interact with the instance MS1.1, ..., MS4.I2 of the microservice MS1, ..., MS4. An example for such an URL could be "http://www.server-1-address.com/services/ms1 /1" which could relate to the first execution server S1 (http://.server-1-address.com), in particular the location of an instance of the microservice MS1 ("/services/ms1"), in particular the location of the first instance MS1.I1 of the microservice MS1 ("/1") executed on the first execution server S1. Another example for such an URL could be "http://www.server-2-address.com/services/ms2/2" which could relate to the second execution server S2 (http://.server-2-address.com), in particular the location of an instance of the microservice MS2 ("/services/ms2"), in particular the location of the second instance MS2.I3 of the microservice MS2 ("/2") executed on the second execution server S2.

In the displayed embodiment, the microservice information MSI.1, ..., MSI.8 comprises authorization information MS1.I1.AUT, ..., MS4.I2.AUT, which can be used for determining the authorization of an accessing entity or a client C to access or use the respective instance MS1. I1, ..., MS4.I2 of the microservice MS1, ..., MS4. In this embodiment, the authorization information MS1.I1.AUT, ..., MS4.I2.AUT is defined on the level of the instances MS1. I1, ..., MS4.I2 of the microservice MS1, ..., MS4, so that instances MSI. I1, ..., MS4.I2 of the same microservice MS1, ..., MS4 can be related to different authorization information. Such a structure can be useful if certain accessing entities, applications or clients C having different importance or resource requirements, for example if certain applications have a higher importance, or if certain accessing entities pay for different resource levels.

Alternatively or additionally authorization information can also be defined on the level of the microservice MS1, ..., MS4, in other words, the authorization information is related to the microservice MS1, ..., MS4. The same effect can be achieved by defining the authorization information on the level of the instances MS1. I1, ..., MS4.I2 of the microservice MS1, ..., MS4, wherein the authorization information MS1.I1.AUT, ..., MS4.I2.AUT of different instances MS1. I1, ..., MS4.I2 of the same microservice MS1, ..., MS4 are equivalent. Such a structure is useful if certain accessing entities, applications or clients C are allowed to use only a subset of microservices MS1, ..., MS4, e.g. if only a subset of the microservices MS1, ..., MS4 is exposed to all applications, and all other microservices MS1, ..., MS4 are available only for other microservices MS1, ..., MS4 or internal applications.

Alternatively or additionally authorization information can also be defined on the level of the microservice database MSDB (or equivalently on the level of the server S, or on the level of the microservice registry). The same effect can be achieved by defining the authorization information on the level of the instances MS1. I1, ..., MS4.I2 of the microservice MS1, ..., MS4, wherein the authorization information MS1.I1.AUT, ..., MS4.I2.AUT of all instances MSI. I1, ..., MS4.I2 of the all microservice MS1, ..., MS4 are equivalent. Such a structure is useful if only certain accessing entities, applications or clients C are allowed to interact or use the microservice registry or the microservices MS1, ..., MS4 at all.

It is possible to combine authorization information on different levels, e.g. on the level of the microservice database MSDB to regulate the accessing entities, applications or clients C allowed to interact with the microservice registry or the microservices MS1, ..., MS4, and to defined privileged accessing entities, applications or clients C which get access to all instances MS1. I1, ..., MS4.I2 of the microservice MS1, ..., MS4, and not only to a certain subset of instances MS1. I1, ..., MS4.I2 of the microservice MS1, ..., MS4.

In this embodiment, each authorization information MS1.I1.AUT, ..., MS4.I2.AUT comprises one or several access credentials. Examples for access credentials are shared secrets (another term is "token") or digital certificate.

For example, an authorization information MS1.I1.AUT, ..., MS4.I2.AUT can comprise the shared secrets "DHB7EWF53X" and "ZHW5JV6S9M". In this case, microservice information MSI is granted if the microservice request MSR comprises at least one of the shared secrets "DHB7EWF53X" and "ZHW5JV6S9M". For example, the first shared secret "DHB7EWF53X" can be communicated to a first accessing entity, and the second shared secret "ZHW5JV6S9M" can be communicated to a second accessing entity, and a third shared secret "5GC48KNDS2" can be communicated to a third entity. In this case, the first entity and the second entity are provided with a microservice information MSI.1, ..., MSI.8 by issuing a microservice request MSR comprising the respective shared secret, but the third entity is not provided with a microservice information MSI.1, ..., MSI.8 if issuing a microservice request MSR, because it has no access to the first shared secret or the second shared secret.

As an alternative, an authorization information MS1.I1.AUT, ..., MS4.I2.AUT can comprise a parent digital certificate (or at least the public key of the parent digital certificate), a first entity stores a first digital certificate (or at least the private key of the first digital certificate), and a second entity stores a second digital certificate (or at least the private key of the second digital certificate). The first entity includes a signature signed with the private key of the first digital certificate (e.g. based on the logic name of the microservice MS1, ..., MS4) into the microservice request MSR, and the second entity includes a signature signed with the private key of the second digital certificate (e.g. based on the logic name of the microservice MS1, ..., MS4) into the microservice request MSR, in order to proof that they are the owner of the first or the second digital certificate. In particular, the first entity is authorized if the first digital certificate is derived from the parent digital certificate contained in the authorization information MS1.I1.AUT, ..., MS4.I2.AUT. In particular, the second entity is authorized if the second digital certificate is derived from the parent digital certificate contained in the microservice information authorization information MS1.I1.AUT, ..., MS4.I2.AUT.

The first digital certificate and/or the second digital certificate are derived from the parent digital certificate, if the first digital certificate and/or the second digital certificate are signed with a private key related to the parent digital certificate, or if such a parent relationship is stored elsewhere.

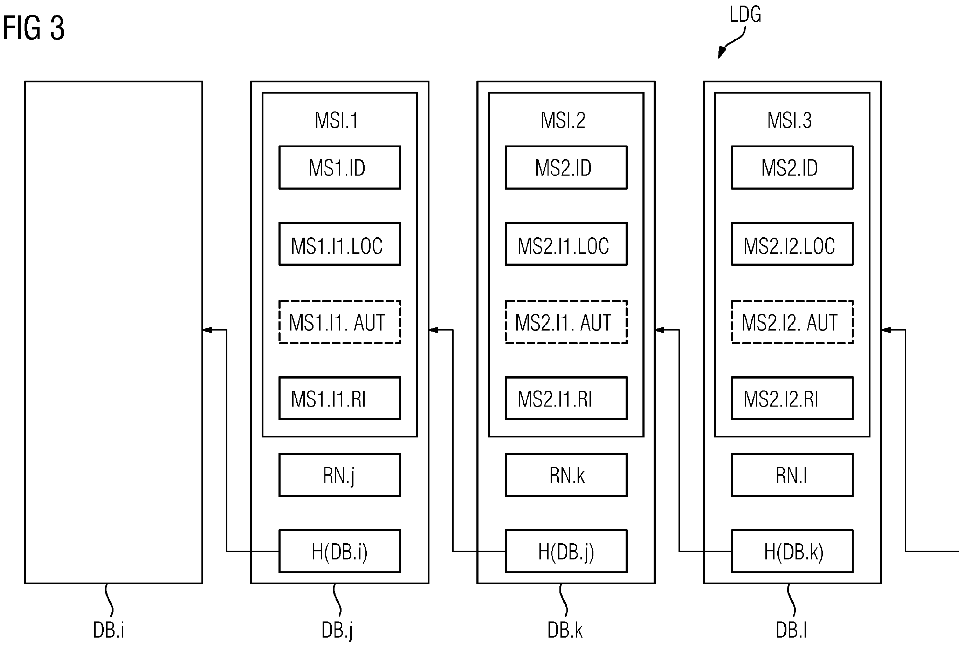

Fig. 3 displays an extract of a distributed ledger LDG storing the microservice database MSDB. In particular, the displayed extract of the distributed ledger LDG contains the microservice information MSI.1, MSI.2, MSI.3. In general, the distributed ledger LDG may contain data blocks DB.i, ..., DB.1 which are not related to the microservice database MSDB, in particular, there can be data blocks DB.i, ..., DB.1 not related to the microservice database MSDB between the data blocks DB.i, ..., DB.1 storing microservice information MSI.1, ..., MSI.7.

The distributed ledger LDG displayed in Fig. 3 is a blockchain, comprising a plurality of data blocks DB.i, ..., DB.1. Alternatively, one can also use other distributed ledgers LDG, for example blocktrees, tangles or distributed ledgers with sidechains. In this embodiment, each of the data blocks DB.i, ..., DB.1 comprises a microservice information MSI.1, ..., MSI.7, a hash value H(DB.i), ..., H(DB.k) based on another data block DB.i, ..., DB.1, in particular based on the preceding data block DB.i, ..., DB.1, and a nonce RN.j, RN.k, RN.1. Alternatively, each data block DB.i, ..., DB.1 can comprise several microservice informations MSI.1, ..., MSI.7 summarized into the same block.

In this embodiment, the microservice information MSI.1, ..., MSI.7 comprises an identifier MS1.ID, ..., MS4.ID of a microservice MS1, ..., MS4, a location MS1.I1.LOC, ..., MS4.I2.LOC of an instance MS1.1, ..., MS4.I2 of a microservice MS1, ..., MS4, and MS1.I1.AUT, ..., MS4.I2.AUT, as already described with respect to Fig. 2. Furthermore, in this embodiment the microservice information MSI.1, ..., MSI.7 comprises a register information MS1.I1.RI, ..., MS4.I2.RI, which defines whether the microservice information MSI.1, ..., MSI.7 is valid, in particular whether the microservice information MSI.1, ..., MSI.7 is up-to-date or outdated. In particular, it is beneficial to include the register information MS1.I1.RI, ..., MS4.I2.RI into the microservice information MSI.1, ..., MSI.7, because the data blocks DB.i, ..., DB.1 of the distributed ledger LDG being a blockchain are immutable.

In this embodiment, the register information MS1.I1.RI, ..., MS4.I2.RI is a flag which can have the values "0" or "1" (equivalently the values "true" or "false"). If an instance MS1. I1, ..., MS4.I2 of a microservice MS1, ..., MS4 is registered, microservice information MSI.1, ..., MSI.7 with register information MS1.I1.RI, ..., MS4.I2.RI being "1" or "true" is included into the microservice database MSDB and/or the distributed ledger LDG. If said instance MS1. I1, ..., MS4.I2 of the microservice MS1, ..., MS4 is deregistered, the same microservice information MSI.1, ..., MSI.7, but with register information MS1.I1.RI, ..., MS4.I2.RI being "0" or "false" is included into the microservice database MSDB and/or the distributed ledger LDG. So it can be determined whether an instance MSI. I1, ..., MS4.I2 of a microservice MS1, ..., MS4 is active or registered by inspecting all subsequent data blocks DB.i, ..., DB.1 of the distributed ledger LDG for an invalidation register information MS1.I1.RI, ..., MS4.I2.RI being "0" or "false".

As an alternative, the register information MS1.I1.RI, ..., MS4.I2.RI can also be empty if an instance MS1. I1, ..., MS4.I2 of a microservice MS1, ..., MS4 is registered, and to deregister said instance MS1. I1, ..., MS4.I2 of the microservice MS1, ..., MS4, new microservice information MSI.1, ..., MSI.7 with the register information MS1.I1.RI, ..., MS4.I2.RI being a hash value based on the data block DB.i, ..., DB.1 comprising the old microservice information MSI.1, ..., MSI.7, or based on the old microservice information MSI.1, ..., MSI.7. In particular, in this case the identifier MS1.ID, ..., MS4.ID, the location MS1.I1.LOC, ..., MS4.I2.LOC and the authorization information MS1.I1.AUT, ..., MS4.I2.AUT of the new microservice information MSI.1, ..., MSI.7 may be empty.

In general, a nonce RN.j, ..., RN.1 is a data item that can be chosen arbitrarily by the creator of the data block DB.i, ..., DB.1 without affecting the actual content of the data block DB.i, ..., DB.1. In particular, the usage and/or the content of the microservice information MSI.1, ..., MSI.7 are not affected by the choice of the nonce RN.j, ..., RN.1. In general, changing the nonce RN.j, ..., RN.1 also changes a hash of the further data block DB.i, ..., DB.1.

In particular, for inserting a data block DB.i, ..., DB.1 into the distributed ledger LDG, a consensus algorithm (e.g. proof of work, proof of storage, proof of stake, proof of elapsed time) must be executed, wherein the consensus algorithm may be based on the nonce RN.j, ..., RN.1 of the data block DB.i, ..., DB.1 to be inserted. In this embodiment, the nonce RN.j, ..., RN.1 must be chosen by the creator of the data block DB.i, ..., DB.1 such that the hash H(DB.i), ..., H (DB.1) of said data block DB.i, ..., DB.1 fulfills a certain condition. In this embodiment, the condition is that the hash H(DB.i), ..., H (DB.1) of said data block DB.i, ..., DB.1 is smaller than a given threshold.

In this embodiment, the hash H(DB.j) of a data block DB.j is calculated as H(DB.j) = SHA256(H(MSI.1) + H(DB.i) + RN.j), wherein the SHA256 hash function can be replaced with any other suitable hash function. The operation "+" can be understood as arithmetic addition of numbers or as concatenation of strings (by converting numbers to strings before the concatenation). In particular, the hash H(MSI.1) of the microservice information MSI.1 can be the Merkle root of the microservice information MSI.1. Alternatively, the hash H(DB.j) of a data block DB.j can also be based on other data items contained in the data block.

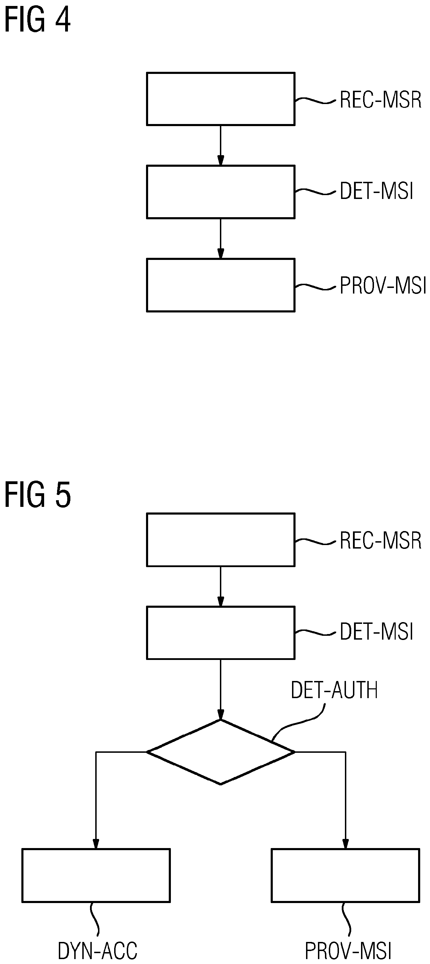

Fig. 4 displays a first embodiment of the method for providing microservice information MSI, MSI.1, ..., MSI.7. The first embodiment comprises the steps of receiving REC-MSR a microservice request MSR with a first interface S.IF, determining DET-MSI the microservice information MSI, MSI.1, ..., MSI.7 by querying a microservice database MSDB based on the microservice request MSR with a first computation unit S.CU, wherein the microservice database MSDB is stored in a distributed ledger LDG, and providing PROV-MSI the microservice information MSI, MSI.1, ..., MSI.7 with the first interface S.IF.

In this first embodiment, the microservice request MSR comprises an identifier MS1.ID, ..., MS4.ID of a first microservice MS1, ..., MS4, wherein the identifier MS1.ID, ..., MS4.ID is the logical name of the first microservice MS1, ..., MS4. In the step of determining DET-MSI the microservice information MSI, MSI.1, ..., MSI.7, all microservice informations MSI, MSI.1, ..., MSI.7 comprising the identifier MS1.ID, ..., MS4.ID contained in the microservice request MSR are selected from the microservice database MSDB. This is equivalent with identifying all instances MSI. I1, ..., MS4.I2 of the first microservice MS1, ..., MS4 being subject of the microservice request MSR.

In this first embodiment, the microservice database MSDB (or equivalently, the microservice information MSI.1, ..., MSI.7 of the microservice database MSDB) is stored in a distributed ledger LDG being a blockchain. So to determine the all microservice informations MSI, MSI.1, ..., MSI.7 comprising the identifier MS1.ID, ..., MS4.ID contained in the microservice request MSR, all data blocks DB.i, ..., DB.1 of the distributed ledger LDG have to be iterated while inspecting the register information MS1.I1.RI, ..., MS4.I2.RI to determine which microservice information MSI.1, ..., MSI.7 is up-to-date or outdated. The list of up-to-date microservice information MSI.1, ..., MSI.7 (or in this first embodiment equivalently the list of available instances MS1. I1, ..., MS4.I2 of microservices MS1, ..., MS4) can advantageously be precalculated and updated each time the distributed ledger LDG changes.

In particular, within the step of determining DET-MSI the microservice information MSI, MSI.1, ..., MSI.7 the microservice information MSI, MSI.1, ..., MSI.7 information contained in the microservice database MSDB or the distributed ledger LDG may be altered, in particular, data items of the microservice information MSI, MSI.1, ..., MSI.7 may be removed, in particular authentication information MS1.I1.AUT, ..., MS4.I2.AUT may be removed. Note that the microservice information MSI, MSI.1, ..., MSI.7 provided still needs to include a location MS1.I1.LOC, ..., MS4.I2.LOC of the instance MS1.I1, ..., MS4.I2 of the microservice first MS1, ..., MS4.

In this embodiment, the microservice information MSI may be provided PROV-MSI from the set of microservice informations MSI, MSI.1, ..., MSI.7 comprising the identifier MS1.ID, ..., MS4.ID contained in the microservice request MSR is selected by means of load balancing between the instances MSI. I1, ..., MS4.I2 of the first microservice MS1, ..., MS4. Alternatively, the microservice information MSI to be provided PROV-MSI from the set of microservice informations MSI, MSI.1, ..., MSI.7 comprising the identifier MS1.ID, ..., MS4.ID contained in the microservice request MSR can be selected randomly.

Fig. 5 displays a second embodiment of the method for providing microservice information MSI, MSI.1, ..., MSI.7. The second embodiment comprises the steps of the first embodiment (which can comprise features and enhancements described with respect to the first embodiment or Fig. 4), furthermore in this second embodiment the microservice request MSR comprises authentication information, furthermore the second embodiment comprises the step of determining DET-AUTH an authorization to access the first microservice MS.1, ..., MS.4 and/or an instance MS1. I1, ..., MS4.I2 of the first microservice MS.1, ..., MS.4 based on the authentication information with the first computation unit S.CU. In the case of a positive authorization, the step of providing PROV-MSI the microservice information MSI, MSI.1, ..., MSI.7 is executed, in the case of a negative information, a step of denying access DNY-ACC to the first microservice MS.1, ..., MS.4 and/or an instance MS1. I1, ..., MS4.I2 of the first microservice MS.1, ..., MS.4 is executed. The step of denying access DNY-ACC can be executed by providing an error message and/or an error code, or by providing no data at all.

In the second embodiment, the microservice information MSI.1, ..., MSI.7 contained in the microservice database MSDB and/or in the distributed ledger LDG comprises authorization information MS1.I1.AUT, ..., MS4.I2.AUT comprising one or several access shared secrets or an access tokens, wherein the authorization information MS1.I1.AUT, ..., MS4.I2.AUT can regulate the authorization on the level of an instance MS1. I1, ..., MS4.I2 of the first microservice MS.1, ..., MS.4, on the level of the first microservice MS.1, ..., MS.4, and/or on the level of the microservice registry. Furthermore, the microservice request MSR and/or the authentication information comprises a request shared secret or a request token, and the step of determining DET-AUTH an authorization is based on the access shared secrets and the request shared secret.

Within the step of determining DET-AUTH an authorization to access the first microservice MS.1, ..., MS.4 and/or an instance MS1.I1, ..., MS4.I2 of the first microservice MS.1, ..., MS.4, the first computation unit S.CU determines whether the one of the access shared secrets matches the request shared secrets. If one of the access shared secrets matches the request shared secret, the authorization is positive, and the step of providing PROV-MSI the microservice information MSI, MSI.1, ..., MSI.7 is executed. If none of the access shared secrets matches the request shared secret, the authorization is negative, and the step of denying access DNY-ACC to the first microservice MS.1, ..., MS. 4 and/or an instance MS1.I1, ..., MS4.I2 of the first microservice MS.1, ..., MS.4 is executed.

Alternatively, it is also possible to determine only the microservice informations MSI, MSI.1, ..., MSI.7 comprising the identifier MS1.ID, ..., MS4.ID contained in the microservice request MSR and a access shared secret matching the request shared secret contained in the microservice request MSR.

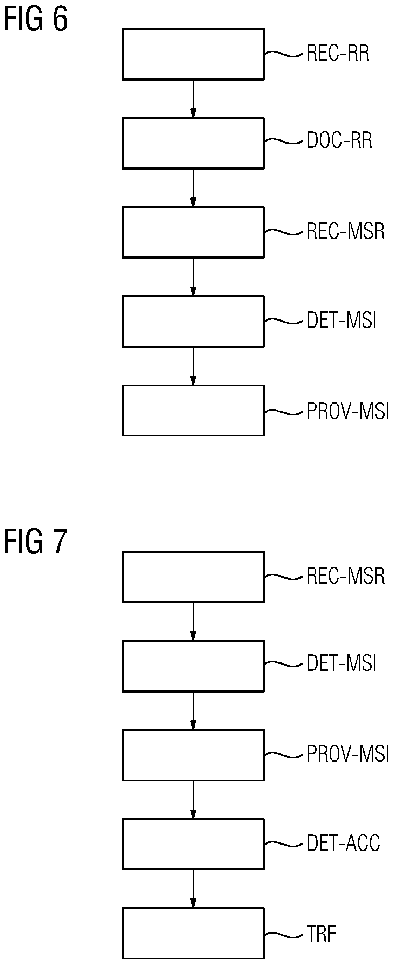

Fig. 6 displays a third embodiment of the method for providing microservice information MSI, MSI.1, ..., MSI.7. The third embodiment comprises the steps of the first embodiment (which can comprise features and enhancements described with respect to the first embodiment or Fig. 4), furthermore the third embodiment comprises the steps of receiving REC-RR a registration request and/or a deregistration request related to a second microservice MS1, ..., MS4 and/or related to an instance MS1.I1, ..., MS4.I2 of a second microservice MS1, ..., MS4 with the first interface S.IF, and documenting DOC-RR a registration and/or a deregistration of the second microservice MS1, ..., MS4 and/or the instance MSI.I1, ..., MS4.I2 of the second microservice MS1.I1, ..., MS4.I2 in the distributed ledger LDG with the first computation unit S.CU.

In particular, in the third embodiment the steps of receiving REC-RR the registration request and/or the deregistration request and of documenting DOC-RR the registration and/or the deregistration are executed before the steps of receiving REC-MSR the microservice request MST, of determining DET-MSI the microservice information MSI and of providing PROV-MSI the microservice information MSI. Alternatively, the steps of receiving REC-RR the registration request and/or the deregistration request and of documenting DOC-RR the registration and/or the deregistration can be executed after the steps of receiving REC-MSR the microservice request MST, of determining DET-MSI the microservice information MSI and of providing PROV-MSI the microservice information MSI or in parallel to these steps. In particular, the second microservice MS1, ..., MS4 can be identical with the first microservice MS1, ..., MS4. In particular, the instance MS1.I1, ..., MS4.I2 of the second microservice MS1, ..., MS4 can be identical with an instance MS1.I1, ..., MS4.I2 of the first microservice MS1, ..., MS4.

In this embodiment, the registration request and/or the deregistration request are issued by the instance MS1.I1, ..., MS4.I2 of the second microservice MS1, ..., MS4. The registration request or the deregistration request comprises an identifier MS1.ID, ..., MS4.ID of the second microservice MS1, ..., MS4 and a location MS1.I1.LOC, ..., MS4.I2.LOC of the instance MS1.I1, ..., MS4.I2 of the second microservice MS1, ..., MS4. Advantageously the registration request can comprise authorization information MS1.I1.AUT, ..., MS4.I2.AUT, alternatively, the authorization information can be determined or set by the microservice registry.

Within the step of documenting DOC-RR a registration and/or a deregistration of the second microservice MS1, ..., MS4 and/or the instance MS1.I1, ..., MS4.I2 of the second microservice MS1.I1, ..., MS4.I2 in the distributed ledger LDG a further microservice information is created comprising the identifier MS1.ID, ..., MS4.ID of the second microservice MS1, ..., MS4, the location MS1.I1.LOC, ..., MS4.I2.LOC of the instance MS1.I1, ..., MS4.I2 of the second microservice MS1, ..., MS4, and optionally the authorization information MS1.I1.AUT, ..., MS4.I2.AUT. The further microservice information is stored in the microservice database MSDB and/or in the distributed ledger LDG. In particular, the registration information MS1.I1.RI, ..., MS4.I2.RI can be set as described with respect to Fig. 3 depending on whether a registration or a deregistration is documented in the distributed ledger LDG.

In order to store the further microservice information in the distributed ledger LDG, a further data block comprising the further microservice information can be created and inserted into the distributed ledger LDG by the first computation unit S.CU. Alternatively, the further microservice information can be sent to another computation node, which create the further data block and inserts the further data block into the distributed ledger LDG. Creating and/or inserting a further data block into the distributed ledger LDG can comprise a proof of work, a proof of stake, a proof of storage, or a proof of elapsed time. Furthermore, creating and/or inserting the further data block into the distributed ledger LDG can comprise selecting a parent data block and/or calculating a hash value of the parent data block. Furthermore, creating and/or inserting the further data block into the distributed ledger LDG can comprise selecting a suitable nonce RN.j, .... RN.1.

Fig. 7 displays a fourth embodiment of the method for providing microservice information MSI, MSI.1, ..., MSI.7. The fourth embodiment comprises the steps of the first embodiment (which can comprise features and enhancements described with respect to the first embodiment or Fig. 4), furthermore the fourth embodiment comprises the steps of determining DET-ACC a first account based on the microservice request MRS with the first computation unit S.CU, wherein the first account is related with an accessing entity issuing the microservice request MSR, and of transferring TRF an amount of cryptocurrency from the first account to a second account with the first computation unit S.CU, wherein the second account is related with a microservice entity operating the first microservice MS1, ..., MS4 and/or the instance MS1.I1, ..., MS4.I2 of the first microservice MS1, ..., MS4.

In this fourth embodiment, the microservice request MRS comprises a public key related to the first account, and the microservice registry or the server S stores the public key related to the second account in a first memory unit MU of the server S. Alternatively, the public key related to the second account can be stored in the microservice database MSDB and/or in the distributed ledger LDG, in particular within the microservice information MSI.1, ..., MSI.7, so that there can be an account for receiving cryptocurrency for each instance MS1.I1, ..., MS4.I2 of the first microservice MS1, ..., MS4. Furthermore, the transferring TRF the amount of cryptocurrency is executed by means of a smart contract. In particular, the smart contract initiates the transfer of the amount of cryptocurrency if a correct microservice request MSR is received by the first interface S.IF.

In particular, the server S can create a transaction log which transfers the amount of cryptocurrency from the first account to the second account if the transaction log is included into the distributed ledger LDG or into another distributed ledger. In particular in the case when the first account needs to create a signature of the transaction log in order to induce a transfer of cryptocurrency, the server S can provide the transaction log to the entity issuing the microservice request MSR, so that the entity issuing the microservice request MSR can create a signature of the transaction log with the private key associated with the public key of the first account. Alternatively, the microservice request MSR can comprise the transaction log and a signature of the transaction log signed with said key.

In particular, the step of determining DET-MSI the microservice information MSI can be based on the amount of cryptocurrency being transferred. For example, the microservice request MSR can comprise the amount of cryptocurrency to be transferred, and the load balancing can prefer microservice requests MSR with a high amount of cryptocurrency to be transferred, in order to create a market based on supply and demand. In particular, also the authorization information MS1.I1.AUT, ..., MS4.I2.AUT can be based on the amount of cryptocurrency being transferred, for example giving a minimal amount of cryptocurrency being required for the usage of an instance MS1.I1, ..., MS4.I2 of the first microservice MS1, ..., MS4.

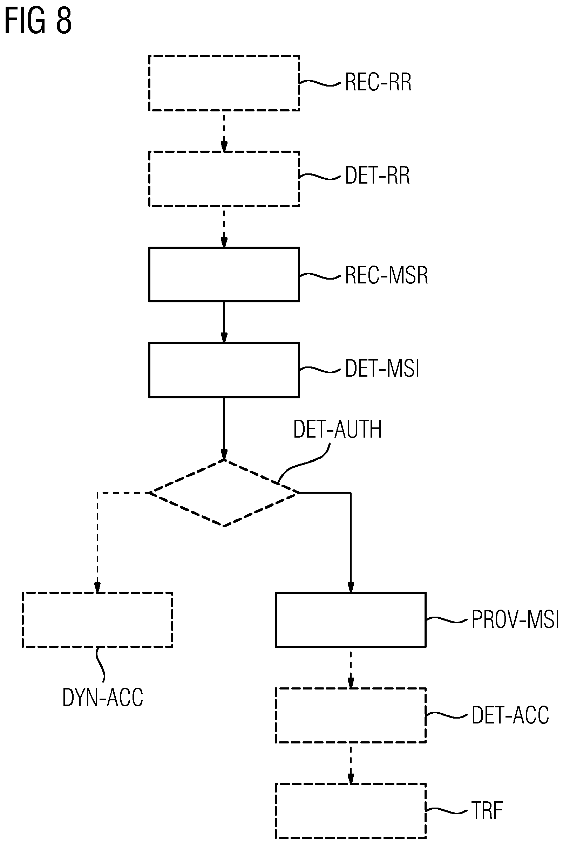

Fig. 8 displays a fifth embodiment of the method for providing microservice information MSI, MSI.1, ..., MSI.7. The fifth embodiment comprises the steps of the first embodiment (which can comprise features and enhancements described with respect to the first embodiment or Fig. 4), the steps of the second embodiment (which can comprise features and enhancements described with respect to the second embodiment or Fig. 5), the steps of the third embodiment (which can comprise features and enhancements described with respect to the third embodiment or Fig. 6), and the steps of the fourth embodiment (which can comprise features and enhancements described with respect to the fourth embodiment or Fig. 7). In particular, the steps marked with a dashed line are optional steps.

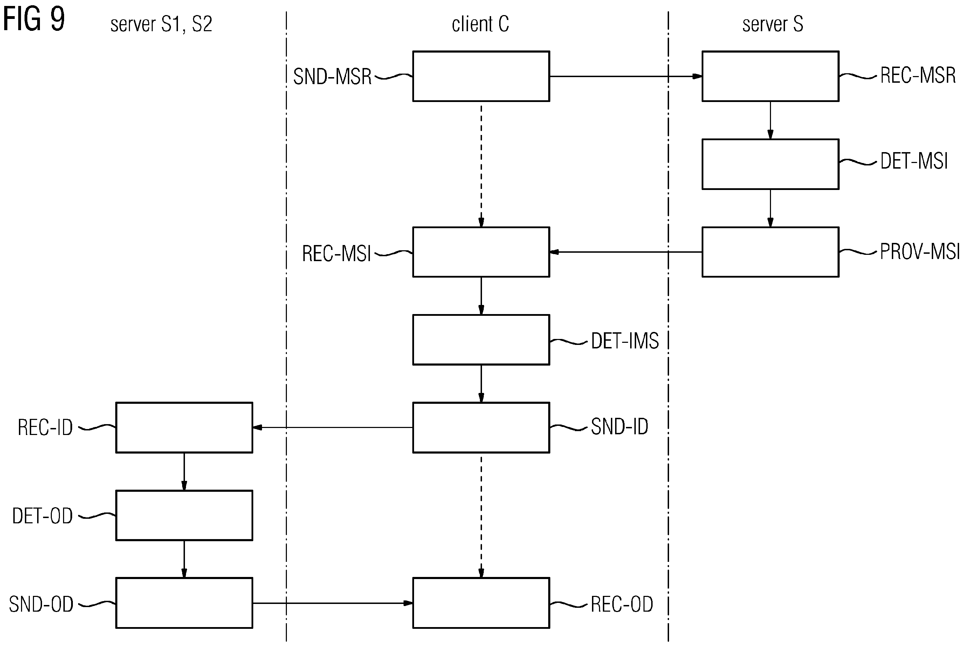

Fig. 9 displays an embodiment of the method for receiving output data from an instance MS1.I1, ..., MS4.I2 of a first microservice MS1,..., MS4, or of the method for using the microservice information MSI provided by a method according to the invention.

The first step of the displayed embodiment is sending SND-MSR a microservice request MSR with a second interface C.IF of a client C, in particular sending the microservice request MSR from the second interface C.IF of the client to the first interface S.IF of the server. The microservice information MSI can comprise data as described with respect to one of the embodiments of the method for providing PROV-MSI microservice information MSI.

The next steps of the displayed embodiment are receiving REC-MSR the microservice request MSR with a first interface S.IF of a server S, determining DET-MSI the microservice information MSI by querying a microservice database MSDB based on the microservice request MSR with a first computation unit S.CU of the server, wherein the microservice database MSDB is stored in a distributed ledger LDG, and providing PROV-MSI the microservice information MSI with the first interface S.IF of the server. These steps can comprise features and enhancements described with respect to the embodiments of the method for providing microservice information MSI or Fig. 4 to Fig. 8. Furthermore, the server S can execute further steps of the method for providing microservice information MSI described with respect to the embodiments of the method for providing microservice information MSI or Fig. 4 to Fig. 8.

The next step of the displayed embodiment is receiving REC-MSI the microservice information MSI with the second interface C.IF of the client, wherein the microservice information MSI was provided PROV-MSI by the first interface S.IF of the server. The microservice information MSI can comprise data as described with respect to one of the embodiments of the method for providing microservice information MSI.

The next step of the described embodiment is determining DET-IMS an instance MS1.I1, ..., MS4.I2 of a first microservice MS1, ..., MS4 based on the microservice information MSI with a second computation unit C.CU of the client. In particular, the instance MS1.I1, ..., MS4.I2 of the first microservice MS1, ..., MS4 can be given by the location MS1.I1.LOC, ..., MS4.I2.LOC of the instance MS1.I1, ..., MS4.I2 of the first microservice MS1, ..., MS4, which is contained in the microservice information MSI. So the instance MS1.I1, ..., MS4.I2 of the first microservice MS1, ..., MS4 can be determined by extracting the location MS1.I1.LOC, ..., MS4.I2.LOC of the instance MS1.I1, ..., MS4.I2 of the first microservice MS1, ..., MS4.

The next steps of the described embodiment are sending SND-ID input data to the instance MS1.I1, ..., MS4.I2 of the first microservice MS1, ..., MS4 with the second interface C.IF of the client, and receiving the input data by a microservice server S1, S2. In particular, the location MS1.I1.LOC, ..., MS4.I2.LOC of the instance MS1.I1, ..., MS4.I2 of the first microservice MS1, ..., MS4 can be given as an URL, and the instance MS1.I1, ..., MS4.I2 of the first microservice MS1, ..., MS4 can be a webserver, and the input data can be transmitted to the webserver by issuing a HTTP-GET or a HTTP-POST request using the input data as arguments. In particular, the microservice server S1, S2 executes the instance MS1.I1, ..., MS4.I2 of the first microservice MS1, ..., MS4 determined in the step of determining DET-IMS.

The next steps of the described embodiment are determining DET-OD output data with the microservice server S1, S2 by applying the instance MS1.I1, ..., MS4.I2 of the first microservice MS1, ..., MS4 onto the input data, sending SND-OD the output data with the microservice server S1, S2, and receiving REC-OD the output data from the instance MS1.I1, ..., MS4.I2 of the first microservice MS1, ..., MS4 with the second interface C.IF of the client C.

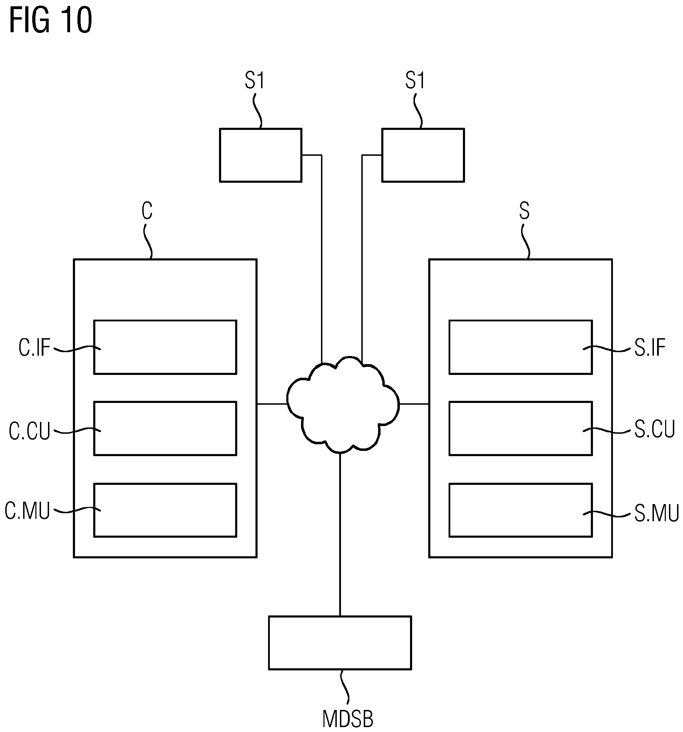

Fig. 10 shows a system for providing and/or using microservice information MSI. The system comprises a server S, a client C, microservice servers S1, S2 and a microservice database MSDB stored in a distributed ledger LDG, all components connected by means of a network NETW.

The server S, the client C, and/or the microservice servers S1, S2, may be a (personal) computer, a workstation, a virtual machine running on host hardware, a microcontroller, or an integrated circuit. As an alternative, server S, the client C, and/or the microservice servers S1, S2 can be a real or a virtual group of computers (the technical term for a real group of computers is "cluster", the technical term for a virtual group of computers is "cloud"). The server S comprises a first interface S.If, a first computation unit S.CU and a first memory unit S.MU, and the client C comprises a second interface C.IF, a second computation unit C.CU and a second memory unit C.MU.

The first interface S.IF and/or the second interface C.IF can be embodies as a hardware interface or as a software interface (e.g. PCI-Bus, USB or Firewire). In general, the first computation unit S.CU and/or the second computation unit C.CU can comprise hardware elements and software elements, for example a microprocessor, a field programmable gate array (an acronym is "FPGA") or an application specific integrated circuit (an acronym is "ASIC"). The first memory unit S.MU and/or the second memory unit C.MU can be embodied as non-permanent main memory (e.g. random access memory) or as permanent mass storage (e.g. hard disk, USB stick, SD card, solid state disk).

The network NETW can be realized as a LAN (acronym for "local area network"), in particular a WiFi network, or any other local connection, e.g. via Bluetooth or USB (acronym for "universal serial bus"). The network NETW can also be realized as a WAN (acronym for "wide area network"), in particular the network NETW can be identical with the internet. The network NETW can alternatively also be realized as a VPN (acronym for "virtual private network").

The microservice database MSDB can be contained in the first memory unit S.MU of the server, or it can be stored on a separate storage unit, as indicated in in Fig. 10. In particular, if stored in a distributed ledger LDG, the microservice database MSDB can be stored within a peer-to-peer network.

Wherever not already described explicitly, individual embodiments, or their individual aspects and features, described in relation to the drawings can be combined or exchanged with one another without limiting or widening the scope of the described invention, whenever such a combination or exchange is meaningful and in the sense of this invention. Advantageous which are described with respect to one embodiment of the present invention or with respect to one figure are, wherever applicable, also advantages of other embodiments of the present invention.

## Claims

1. A method for providing microservice information (MSI, MSI.1, ..., MSI.7), comprising:
- receiving (REC-MSR) a microservice request (MSR) with a first interface (S.IF),
- determining (DET-MSI) the microservice information (MSI, MSI.1, ..., MSI.7) by querying a microservice database (MSDB) based on the microservice request (MSR) with a first computation unit (S.CU),
wherein the microservice database (MSDB) is stored in a distributed ledger (LDG),
- providing (PROV-MSI) the microservice information (MSI, MSI.1, ..., MSI.7) with the first interface (S.IF).

2. The method according to claim 1, wherein the microservice request (MSR) is related to a first microservice (MS1, ..., MS4), and wherein the microservice information (MSI, MSI.1, ..., MSI.7) is based on an instance (MS1.I1, ..., MS4.I2) of the first microservice (MS1, ..., M4).

3. The method according to claim 2, wherein the microservice request (MSR) comprises an identifier (MS1.ID, ..., MS4.ID) of the first microservice (MS1, ..., MS4).

4. The method according to claim 2 or claim 3, wherein the microservice information (MSI, MSI.1, ..., MSI.7) comprises a location (MS1.I1.LOC, ..., MS4.I2.LOC) of the instance (MS1.I1, ..., MS4.I2) of the first microservice (MS1, ..., MS4).

5. The method according to one of the claims 2 to 4, wherein the microservice request (MSR) comprises authentication information, furthermore comprising:
- determining (DET-AUTH) an authorization to access the first microservice (MS1, ..., MS4) and/or the instance (MS1. 11, ..., MS4.I2) of the first microservice (MS1, ..., MS4) based on the authentication information with the first computation unit (S.CU),
wherein the step of providing (PROV) the microservice information (MSI, MSI.1, ..., MSI.7) is executed only in the case of a positive authorization.

6. The method according to one of the preceding claims, furthermore comprising:
- receiving (REC-RR) a registration request and/or a deregistration request related to a second microservice (MS1, ..., MS4) and/or related to an instance (MS1.I1, ..., MS4.I2) of a second microservice (MS1, ..., MS4) with the first interface (S.IF),
- documenting (DOC-RR) a registration and/or a deregistration of the second microservice (MS1, ..., MS4) and/or the instance (MS1. 11, ..., MS4.I2) of the second microservice (MS1, ..., MS4) in the distributed ledger (LDG) with the first computation unit (S.CU).

7. The method according to one of claims 2 to 6, furthermore comprising:
- transferring (TRF) an amount of cryptocurrency from a first account to a second account with the first computation unit (S.CU),
wherein the first account is related with an accessing entity issuing the microservice request (MSR),
and wherein the second account is related with a microservice entity operating the first microservice (MS1, ..., MS4) and/or the instance (MS1.I1, ..., MS4.I2) of the first microservice (MS1, ..., MS4) .

8. The method according to claim 7, where transferring (TRF) the amount of cryptocurrency is executed by means of a smart contract.

9. The method according to claim 7 or claim 8, furthermore comprising:
- determining (DET-ACC) the first account based on the microservice request (MSR) with the first computation unit (S.CU).

10. The method according to one of the preceding claims, wherein the distributed ledger (LDG) comprises a blockchain, a blocktree and/or a tangle.

11. A method for receiving output data from an instance (MS1.I1, ..., MS4.I2) of a first microservice (MS1, ..., MS4), comprising:
- determining (DET-IMS) the instance (MS1.I1, ..., MS4.I2) of the first microservice (MS1, ..., MS4) based on microservice information (MSI, MSI.1, ..., MSI.7) with a second computation unit (C.CU),
wherein the microservice information (MSI, MSI.1, ..., MSI.7) was determined by querying a microservice database (MSDB) based on a microservice request (MSR) with a first computation unit (S.CU) of a server (S), wherein the microservice database (MSDB) is stored in a distributed ledger (LDG),
- sending (SND-ID) input data to the instance (MS1.I1, ..., MS4.I2) of the first microservice (MS1, ..., MS4) with a second interface (C.IF), and
- receiving (REC-OD) output data from the instance (MS1.I1, ..., MS4.I2) of the first microservice (MS1, ..., MS4) with the second interface (C.IF).

12. A server (S) for providing microservice information (MSI, MSI.1, ..., MSI.7), comprising:
- a first interface (S.IF), configured for receiving (REC-MSR) a microservice request (MSR),
furthermore configured for providing (PROV-MSI) the microservice information (MSI, MSI.1, ..., MSI.7),
- a first computation unit (S.CU), configured for determining (DET-MSI) the microservice information (MSI, MSI.1, ..., MSI.7) by querying a microservice database (MSDB) based on the microservice request (MSR), wherein the microservice database (MSDB) is stored in a distributed ledger (LDG).

13. A client (C) for receiving output data from an instance (MS1.I1, ..., MS4.I2) of a first microservice (MS1, ..., MS4), comprising:
- a second computation unit (C.CU), configured for determining (DET-IMS) the instance (MS1.I1, ..., MS4.I2) of the first microservice (MS1, ..., MS4) based on microservice information (MSI, MSI.1, ..., MSI.7), wherein the microservice information (MSI, MSI.1, ..., MSI.7) was determined by querying a microservice database (MSDB) based on a microservice request (MSR) with a first computation unit (S.CU) of a server (S), wherein the microservice database (MSDB) is stored in a distributed ledger (LDG),
- a second interface (C.IF), configured for sending (SND-ID) input data to the instance (MS1.I1, ..., MS4.I2) of the first microservice (MS1, ..., MS4),
furthermore configured for receiving (REC-OD) output data from the instance (MS1.I1, ..., MS4.I2) of the first microservice (MS1, ..., MS4).

14. A computer program product comprising program elements which induce a server (S) to carry out the steps of the method for providing microservice information (MSI, MSI.1, ..., MSI.7) according to one of the claims 1 to 10, when the program elements are loaded into a first memory (S.MU) of the server (S).

15. A computer-readable medium on which program elements are stored that can be read and executed by a server (S), in order to perform steps of the method for providing microservice information (MSI, MSI.1, ..., MSI.7) according to one of the claims 1 to 10, when the program elements are executed by the server (S).

## Amended claims

### Amended claims in accordance with Rule 137(2) EPC.

1. A method for providing microservice information (MSI, MSI.1, ..., MSI.7), comprising:
- receiving (REC-MSR) a microservice request (MSR) with a first interface (S.IF),
wherein the microservice request (MSR) is related to a first microservice (MS1, ..., MS4),
- determining (DET-MSI) the microservice information (MSI, MSI.1, ..., MSI.7) by querying a microservice database (MSDB) based on the microservice request (MSR) with a first computation unit (S.CU),
wherein the microservice information (MSI, MSI.1, ..., MSI.7) is based on an instance (MS1.I1, ..., MS4.I2) of the first microservice (MS1, ..., M4),
wherein the microservice database (MSDB) is stored in a distributed ledger (LDG),
- providing (PROV-MSI) the microservice information (MSI, MSI.1, ..., MSI.7) with the first interface (S.IF).

2. The method according to claim 1, wherein the microservice request (MSR) comprises an identifier (MS1.ID, ..., MS4.ID) of the first microservice (MS1, ..., MS4).

3. The method according to claim 1 or claim 2, wherein the microservice information (MSI, MSI.1, ..., MSI.7) comprises a location (MS1.I1.LOC, ..., MS4.I2.LOC) of the instance (MS1.I1, ..., MS4.I2) of the first microservice (MS1, ..., MS4).

4. The method according to one of the preceding claims , wherein the microservice request (MSR) comprises authentication information, furthermore comprising:
- determining (DET-AUTH) an authorization to access the first microservice (MS1, ..., MS4) and/or the instance (MS1.I1, ..., MS4.I2) of the first microservice (MS1, ..., MS4) based on the authentication information with the first computation unit (S.CU),
wherein the step of providing (PROV) the microservice information (MSI, MSI.1, ..., MSI.7) is executed only in the case of a positive authorization.

5. The method according to one of the preceding claims, furthermore comprising:
- receiving (REC-RR) a registration request and/or a deregistration request related to a second microservice (MS1, ..., MS4) and/or related to an instance (MS1.I1, ..., MS4.I2) of a second microservice (MS1, ..., MS4) with the first interface (S.IF),
- documenting (DOC-RR) a registration and/or a deregistration of the second microservice (MS1, ..., MS4) and/or the instance (MS1.I1, ..., MS4.I2) of the second microservice (MS1, ..., MS4) in the distributed ledger (LDG) with the first computation unit (S.CU).

6. The method according to one of the preceding claims, furthermore comprising:
- transferring (TRF) an amount of cryptocurrency from a first account to a second account with the first computation unit (S.CU),
wherein the first account is related with an accessing entity issuing the microservice request (MSR),
and wherein the second account is related with a microservice entity operating the first microservice (MS1, ..., MS4) and/or the instance (MS1.I1, ..., MS4.I2) of the first microservice (MS1, ..., MS4) .

7. The method according to claim 6, where transferring (TRF) the amount of cryptocurrency is executed by means of a smart contract.

8. The method according to claim 6 or claim 7, furthermore comprising:
- determining (DET-ACC) the first account based on the microservice request (MSR) with the first computation unit (S.CU).

9. The method according to one of the preceding claims, wherein the distributed ledger (LDG) comprises a blockchain, a blocktree and/or a tangle.

10. A method for receiving output data from an instance (MS1.I1, ..., MS4.I2) of a first microservice (MS1, ..., MS4), comprising:
- determining (DET-IMS) the instance (MS1.I1, ..., MS4.I2) of the first microservice (MS1, ..., MS4) based on microservice information (MSI, MSI.1, ..., MSI.7) with a second computation unit (C.CU),
wherein the microservice information (MSI, MSI.1, ..., MSI.7) was determined by querying a microservice database (MSDB) based on a microservice request (MSR) with a first computation unit (S.CU) of a server (S), wherein the microservice database (MSDB) is stored in a distributed ledger (LDG),
- sending (SND-ID) input data to the instance (MS1.I1, ..., MS4.I2) of the first microservice (MS1, ..., MS4) with a second interface (C.IF), and
- receiving (REC-OD) output data from the instance (MS1.I1, ..., MS4.I2) of the first microservice (MS1, ..., MS4) with the second interface (C.IF).

11. A server (S) for providing microservice information (MSI, MSI.1, ..., MSI.7), comprising:
- a first interface (S.IF), configured for receiving (REC-MSR) a microservice request (MSR), wherein the microservice request (MSR) is related to a first microservice (MS1, ..., MS4),
furthermore configured for providing (PROV-MSI) the microservice information (MSI, MSI.1, ..., MSI.7),
- a first computation unit (S.CU), configured for determining (DET-MSI) the microservice information (MSI, MSI.1, ..., MSI.7) by querying a microservice database (MSDB) based on the microservice request (MSR), wherein the microservice information (MSI, MSI.1, ..., MSI.7) is based on an instance (MS1.I1, ..., MS4.I2) of the first microservice (MS1, ..., M4), wherein the microservice database (MSDB) is stored in a distributed ledger (LDG).

12. A client (C) for receiving output data from an instance (MS1.I1, ..., MS4.I2) of a first microservice (MS1, ..., MS4), comprising:
- a second computation unit (C.CU), configured for determining (DET-IMS) the instance (MS1.I1, ..., MS4.I2) of the first microservice (MS1, ..., MS4) based on microservice information (MSI, MSI.1, ..., MSI.7), wherein the microservice information (MSI, MSI.1, ..., MSI.7) was determined by querying a microservice database (MSDB) based on a microservice request (MSR) with a first computation unit (S.CU) of a server (S), wherein the microservice database (MSDB) is stored in a distributed ledger (LDG),
- a second interface (C.IF), configured for sending (SND-ID) input data to the instance (MS1.I1, ..., MS4.I2) of the first microservice (MS1, ..., MS4),
furthermore configured for receiving (REC-OD) output data from the instance (MS1.I1, ..., MS4.I2) of the first microservice (MS1, ..., MS4).

13. A computer program product comprising program elements which induce a server (S) to carry out the steps of the method for providing microservice information (MSI, MSI.1, ..., MSI.7) according to one of the claims 1 to 9, when the program elements are loaded into a first memory (S.MU) of the server (S).

14. A computer-readable medium on which program elements are stored that can be read and executed by a server (S), in order to perform steps of the method for providing microservice information (MSI, MSI.1, ..., MSI.7) according to one of the claims 1 to 9, when the program elements are executed by the server (S).

15. A computer program product comprising a computer program, the computer program being loadable into a second memory unit (C.MU) of a client (C), including program code sections to make the client (C) execute the method for receiving output data from an instance (MS1.I1, ..., MS4.I2) of a first microservice (MS1, ..., MS4) according to claim 10, when the computer program is executed in said client (C).
